## Europäisches Patentamt

## European Patent Office

## Office européen des brevets

(19)

(11) Publication number: **0 110 531**
**B1**

(12) **EUROPEAN PATENT SPECIFICATION**

(45) Date of publication of patent specification: **30.12.86**

(51) Int. Cl.⁴: **F 16 C 27/00,** F 16 C 17/12, F 16 C 17/02

(21) Application number: **83306232.6**

(22) Date of filing: **14.10.83**

(54) **Hydrodynamic foil bearing.**

(30) Priority: **22.11.82 US 443196**

(43) Date of publication of application:
**13.06.84 Bulletin 84/24**

(45) Publication of the grant of the patent:
**30.12.86 Bulletin 86/52**

(84) Designated Contracting States:
**DE FR GB**

(56) References cited:
**US-A-1 751 646**
**US-A-3 434 761**
**US-A-3 506 314**
**US-A-3 520 578**

(73) Proprietor: **GENERAL MOTORS CORPORATION General Motors Building 3044 West Grand Boulevard Detroit Michigan 48202 (US)**

(72) Inventor: **Trippett, Richard John 1200 Hillside Drive Birmingham Michigan 48009 (US)**

(74) Representative: **Breakwell, John Neil Bower et al GM Patent Section Luton Office (F6) P.O. Box No. 3 Kimpton Road Luton Beds. LU2 0SY (GB)**

Courier Press, Leamington Spa, England.

# Description

This invention relates to hydrodynamic foil bearings.

Typically, in a hydrodynamic bearing, a shaft rotatably contained within a housing is surrounded by a series of foils cantilevered from the housing which wrap the shaft in a series of line contacts parallel to the axis of the shaft under a predetermined preload or tension. This wrapping creates about the surface of the shaft a series of wedge-shaped pockets. Relative high-speed rotation of the shaft relative to the pockets develops or induces a viscous shear which wipes or draws a fluid, such as ambient air, between the shaft surface and the foils to create a very low-friction supporting gas film. The preload significantly affects the stiffness (drag) of the bearing and its operating characteristics, such as start-up torque.

Although such a bearing works well at high speeds, there are difficulties during start-up and coast-down, when the induced viscous shear support film is absent. At start-up, the shaft rests and drags on the bottom of the housing, creating a large starting torque, and a large eccentricity between the starting and final position of the centre axis of the rotating shaft. This eccentricity is undesirable in certain applications, such as turbochargers, since such shaft misalignment decreases efficiency. Other problems encountered in the turbocharger environment include thermal expansion of the housing to which the foils are mounted, which affects the preload of the foils, and foil wear from the frequent starts and stops, which also affects the tension or preload.

The prior art discloses some foil bearings in which foil tension is adjustable. Thus US—A—3,506,314 discloses a foil bearing in a turbine application wherein a shaft is cradled within a housing by several foils in the form of slings hung at one end from the inside of the housing and at the other end from a manually adjustable nut, thereby allowing the slings to be shortened and so tightened against the shaft. Further, US—A—3,434,761 discloses, in one embodiment, a foil bearing in a turboexpander application wherein cantilevered wrapping foils are spring-loaded against the shaft surface, and adjusting screws threaded into the housing and engageable with the springs are manually adjustable to increase or decrease the tension of the foils against the shaft. The disadvantages of these systems are that quick and simple simultaneous tension adjustments of the foils is not possible, inasmuch as each foil must be separately manually adjusted. Also, the foils cannot be simultaneously and automatically adjusted in response to various bearing parameters, such as shaft angular rotational speed, or to take account of temperature effects.

The preamble of present claim 1 takes account of the disclosure of the said US—A—3,434,761.

The problem underlying the present invention is that of providing an adjustment feature for the foils of a cantilever-type foil bearing to allow the preload of the foils against a shaft hydrodynamically supported thereby to be continuously adjusted.

This problem can be solved by the measures specified in the characterising portion of claim 1.

Thereby, the foils may be quickly, simply and simultaneously tension-adjusted, either on a one-time or on a continuous basis, and if required on an automatic basis responsive to bearing parameters.

In a preferred embodiment of a hydrodynamic foil bearing in accordance with the present invention, an axial shaft is rotatably supported inside a housing by cantilevered bearing foils in a generally conventional configuration. Each foil wraps the shaft under tension in a circumferential series of line contacts. However, rather than being conventionally rigidly attached to the housing, the foils are anchored to individual, separate foil mounts in the form of rotatable rods that are rotatably mounted in axially extending slots in the housing. The foil mounts have respective accessible toothed driven portions circumferentially disposed about the shaft, and engageable with the teeth of a driving ring gear which is rotatably supported relative to the housing.

As the ring gear is turned and held at a new relative position by any convenient drive means, such as a worm gear, the foil mounts are rotated to new angular position relative to the housing, thereby providing continuous adjustment for decreasing or increasing the tension of the foils against the shaft surface. The preload of the foils and the bearing stiffness may accordingly be increased at start-up, so lifting the shaft away from the housing, and decreasing the eccentricity. Then, in response to increasing shaft angular speed, the foil tension may be decreased by turning the ring gear back, thereby reducing friction as the hydrodynamic support film begins to form. In addition, foil tension may be adjusted in response to other bearing parameters, such as thermal expansion or sag, or to compensate for foil wear.

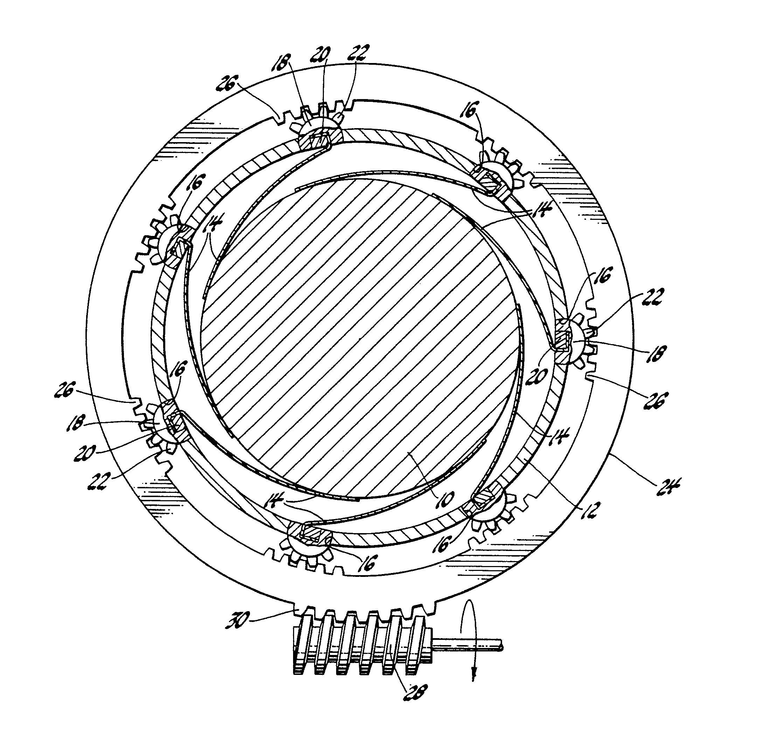

The single Figure of the drawing shows a cross-sectional view, with parts in elevation, of a bearing, foil mounts and driving ring gear of a preferred embodiment of a hydrodynamic foil bearing in accordance with the present invention.

Referring to the drawing, an axial shaft 10 is received within a housing 12 of generally cylindrical shape and is surrounded by a series of seven bearing foils 14. The foils 14 surround or wrap shaft 10 in a generally conventional pattern, engaging the surface of shaft 10 in a circumferential series of parallel axial line contacts. The foils 14 are cantilevered to the inside of the housing 12, by means to be described below.

The operation of the shaft 10, with the bearing foils 14 in a given adjusted position is conventional, with ambient air or other fluid being drawn in by mechanism of viscous shear into the wedge-shaped pockets created by the foil wrapping, to produce a supporting gas film between the foils 14 and the shaft 10. It may be noted at this point that the cylindrical housing 12 is cylindrical for convenience only: some other housing or support would be feasible, provided that the foils were supported in the same pattern. The important element is the wedge-shaped pockets as described.

The housing 12 contains seven circumferentially evenly spaced, axially extending slots 16 of a generally semi-circular cross-section, and having lengths generally equal to the length of the foils 14. Received within the slots 16 are seven foil mounts consisting of rotatable rods 18. The foils 14 are conventionally anchored into the rods 18 by pins 20. In a conventional bearing, the foils 14 would be anchored by like pins 20, but directly to the inside surface of the cylindrical housing 12. On the outside of each rod 18, and accessible from the outside of the cylindrical housing 12, is an arcuately arranged series of gear teeth 22 all of which are concentrically arranged relative to the centre axis of the shaft 10, and which together constitute the driven portions of the rods 18. A ring gear 24 constitutes the drive mechanism, and includes a series of gear teeth 26 which mesh with the gear teeth 22 of the rods 18. The ring gear 24 is rotatably supported relative to the housing 12 by any suitable means, not shown. Finally, a conventional worm gear 28, which could be driven by any suitable means, engages a set of outside gear teeth 30 on the ring gear 24 and releasably turns and holds the ring gear 24 in any desired position relative to the housing 12.

In operation, the ring gear 24 is rotated either clockwise or counterclockwise by the worm gear 28. The engagement of the teeth 26 with the teeth 22 in turn rotates the rods 18 within the slots 16, and thereby increases or decreases the bias of the foils 14 against the outside of shaft 10. Thus, at bearing start-up, the ring gear 24 may be turned counterclockwise to increase the tension or bias of the foils 14 against the shaft 10. This lifts the shaft 10 away from the bottom of the housing 12 to the extent desired, and supports it until the angular rotational speed of the shaft 10 is enough to create a hydrodynamic fluid support film as described above. At such time, the ring gear 24 may be turned clockwise to decrease the rubbing force of the foils 14 on the shaft 10. It would be a relatively simple matter to calibrate the worm gear 28 and the ring gear 24 to correlate various angular positions of the ring gear 24 relative to the housing 12 with the resulting tension or bias of the foils 14 on the shaft 10. The worm gear 28 could then be programmed by means of electronic controls to turn to a desired position to create a desired tension or bias at any desired rotational speed of the shaft 10. It is thus evident that the foils 14 may be adjusted relative to the shaft 10 simultaneously, quickly and also automatically. In addition, the tension or bias of the lower foils 14 against the shaft 10 could be set higher initially, prior to setting the ring gear 24 in place. The relative change in tension would still be equal for all the foils 14 to the same total angular rotation of the ring gear 24. In addition, in an environment of high temperatures the cylindrical housing 12 might expand, and decrease the tension or bias of bearing foils 14: electronic controls could be used to turn the ring gear 24 to compensate for this. Wear of the foils 14, which would decrease the tension 14, could be compensated for in like manner.

Various modifications could be made in the embodiment as disclosed without fundamentally changing the operation thereof. It has already been mentioned that the shape of housing 12 could be different. In addition, the rods 18 could be mounted in some other rotatable fashion, the axial slots 16 not being strictly necessary. The gear teeth 22 could be located anywhere on the rods 18, for example at the end of the cylindrical housing 12, and could conceivably even be on the other side of the rods 18 and be engageable by a gear with teeth on the outside rather than on the inside thereof. Any other means which would turn and hold the rods 18 simultaneously could also be substituted for the ring gear 24.

In summary, the embodiment as described offers the following advantages:

a) foil tension in a foil bearing, and also bearing stiffness, may be adjusted both initially and during bearing operation;

b) the tension of the bearing foils may be quickly and simply adjusted simultaneously in response to shaft speed;

c) the foil bearing allows shaft eccentricity to be controlled, for example for reducing starting torque; and

d) the foil bearing allows the bearing stiffness to be adjusted in response to other parameters, such as thermal expansion and wear of the bearing foils.

**Claims**

1. A hydrodynamic foil bearing of the type having an axial shaft (10) rotatably supported with respect to a housing (12) by a plurality of cantilevered foils (14) bearing against the shaft (10) surface, and means (18 etc.) for adjustably mounting the foils with respect to the housing to vary the preload of the foils against the shaft surface, characterised by:

a plurality of axially extending foil mounts (18) rotatably supported relative to the housing (12) and concentrically arranged about the shaft (10), each mount (18) having a foil (14) attached thereto, to thereby cantilever the foils (14) to the housing (12), and each mount (18) having a driven portion (22);

a drive mechanism (24, 26) rotatably supported relative to the housing (12) and engageable with the driven portions (22) of the foil mounts (18) to simultaneously rotate the mounts relative to the housing (12) and vary the preload of the foils (14) against the shaft (10) surface; and

means (28) for releasably holding the drive mechanism (24, 26) in any rotative position thereof relative to the housing (12).

2. A hydrodynamic foil bearing according to claim 1, characterised in that the axial shaft (10) is rotatably supported inside the housing (12) by cantilevered foils (14) as aforesaid surrounding the shaft (10), each of the foil mounts (18) has a series of gear teeth (22) accessible from outside the housing (12) and concentrically arranged about the axis of the shaft (10), and driving gear means (24) is rotatably supported relative to the housing (12) and has gear teeth (26) engageable with the gear teeth (22) of the rotatable mounts (18) for the simultaneous rotation of the mounts relative to the housing (12).

**Patentansprüche**

1. Hydrodynamisches Folienlager des Typs, der eine Axialwelle (10) besitzt, die drehbar bezüglich eines Gehäuses (12) durch eine Vielzahl von frei vorkragenden Folien (14) gestützt ist, die gegen die Oberfläche der Welle (10) anliegen, und Mittel (18 usw.) zum einstellbaren Anbringen der Folien bezüglich des Gehäuses, um die Vorspannung der Folien gegen die Wellenfläche zu ändern, gekennzeichnet durch:

eine Vielzahl sich axial erstreckender, drehbar relativ zum Gehäuse (12) abgestützter und konzentrisch um die Welle (10) angeordneter Folienbefestigungen (18), wobei jede Befestigung (18) eine daran angebrachte Folie (14) besitzt, um dadurch die Folien (14) zum Gehäuse (12) freikragend vorstehen zu lassen und wobei jede Befestigung (18) einen angetriebenen Abschnitt (22) besitzt;

einen drehbar relativ zum Gehäuse (12) abgestützten und mit den angetriebenen Abschnitten (22) der Folienbefestigungen (18) in Eingriff bringbaren Antriebsmechanismus (24, 26), um gleichzeitig die Befestigungen relativ zum Gehäuse (12) zu drehen und die Vorbelastung der Folien (14) gegen die Oberfläche der Welle (10) zu verändern; und

Mittel (28) zum lösbaren Halten des Antriebsmechanismus (24, 26) in irgendeiner Drehstellung desselben relativ zum Gehäuse (12).

2. Hydrodynamisches Folienlager nach Anspruch 1, dadurch gekennzeichnet, daß die Axialwelle (10) drehbar innerhalb des Gehäuses (12) durch freikragende Folien (14) abgestützt ist, die, wie erwähnt, die Welle (10) umgeben, wobei jede Folienbefestigung (18) eine Reihe von Zähnen (22) besitzt, die von der Außenseite des Gehäuses (12) zugänglich und konzentrisch um die Achse der Welle (10) angeordnet sind, und daß ein Antriebszahnradmittel (24) drehbar relativ zum Gehäuse (12) abgestützt ist und mit den Zähnen (22) der drehbaren Befestigungen (18) zur gleichzeitigen Drehung der Befestigungen relativ zum Gehäuse (12) in Eingriff bringbare Zähne (26) besitzt.

**Revendications**

1. Palier hydrodynamique à feuilles du type comportant un arbre axial (10) supporté de manière à pouvoir tourner par rapport à un carter (12) par une série de feuilles montées en porte-à-faux (14) et portant contre la surface de l'arbre (10), et des moyens (18, etc) pour le montage réglable des feuilles par rapport au carter afin de modifier la précontrainte appliquant les feuilles contre la surface de l'arbre, caractérisé par:

une série de supports axiaux (18) pour les feuilles qui sont montés de façon à pouvoir tourner par rapport au carter (12) et disposés concentriquement autour de l'arbre (10) et à chacun desquels est fixée une feuille (14), de manière à maintenir en porte-à-faux les feuilles (14) par rapport au carter (12), et qui comprennent chacun une partie menée (22);

un mécanisme menant (24, 26) monté de façon à pouvoir tourner par rapport au carter (12) et pouvant engrener avec les parties menées (22) des supports (18) des feuilles afin de les faire tourner simultanément par rapport au carter (12) et de modifier la précontrainte des feuilles (14) contre la surface de l'abre (10); et

des moyens (28) pour retenir, d'une manière libérable, le mécanisme menant (24, 26) dans n'importe laquelle de ses positions angulaires par rapport au carter (12).

2. Palier hydrodynamique à feuilles selon la revendication 1, caractérisé en ce que l'arbre axial (10) est supporté, de façon à pouvoir y tourner, à l'intérieur du carter (12) à l'aide de feuilles montées en porte-à-faux (14) comme indiqué précédemment pour entourer l'arbre (10), en ce que chacun des supports (18) des feuilles présente une série de dents d'engrènement (22) accessibles de l'extérieur du carter (12) et disposées concentriquement autour de l'axe de l'arbre (10), et en ce que des moyens d'engrènement menants (24) sont montés, de façon à pouvoir tourner par rapport au carter (12) et présentent des dents d'engrènement (26) pouvant engrener avec des dents d'engrènement (22) des supports rotatifs (18), de manière à faire tourner simultanément les supports relativement au carter (12).